# EUROPÄISCHE PATENTSCHRIFT

(11) **EP 0 705 871 B1**
(45) Veröffentlichungstag und Bekanntmachung des Hinweises auf die Patenterteilung: **03.05.2000**
(21) Anmeldenummer: 95114478.1
(22) Anmeldetag: 14.09.1995
(51) Int. Cl.: C08K 5/103, C08L 75/04

(54) **Verwendung von Polyolderivaten als innere Trennmittel bei der Herstellung von Polyurethan-Formteilen**
Use of polyol derivatives as internal mold release for the production of polyurethane molded articles
Utilisation de dérivés de polyol comme agents de démontage interne dans la production d'objets moulés en polyuréthane

(30) Priorität: 28.09.1994 DE 4434694
(43) Veröffentlichungstag der Anmeldung: 10.04.1996
(73) Patentinhaber: Lechner, Josef, D-83620 Feldkirchen-Westerham (DE); Lechner, Karl, 83620 Feldkirchen-Westerham (DE)
(72) Erfinder: Lechner, Josef, D-83620 Feldkirchen-Westerham (DE); Lechner, Karl, 83620 Feldkirchen-Westerham (DE)
(74) Vertreter: TER MEER STEINMEISTER & PARTNER GbR

(56) Entgegenhaltungen:
- US-A- 5 208 268
- DATABASE WPI Week 9039 Derwent Publications Ltd., London, GB; AN 90-295672 & JP-A-02 209 961 (SUMITOMO BAYER URETHANE CO.) , 21.August 1990

## Beschreibung

Die vorliegende Erfindung betrifft die Verwendung von Polyolderivaten mit mindestens zwei alkoholischen Hydroxylgruppen und mindestens einem Fettsäurerest pro Molekül als innere Trennmittel beziehungsweise als Polyol mit Trennmitteleigenschaften bei der Herstellung von Polyurethan-Formteilen und -Profilen.

Die Herstellung von harten, halbharten, flexiblen und geschäumten oder ungeschäumten Polyurethan-Werkstoffen erfolgt im allgemeinen so, daß eine Mischung aus Polyolen und Polyisocyanaten in eine Form eingespritzt wird, in der die Additionsreaktion unter Aushärtung und gegebenenfalls Aufschäumen der reagierenden Reaktionsmischung erfolgt, wobei in Abhängigkeit von dem ausgeübten Druck und der Rezeptur Schaumstoffe mit mehr oder weniger dichten Randschichten auf einem Schaumkern oder auch vollständig dichte Formteile erhalten werden. Die hierbei angewandte Form kann aus den unterschiedlichsten Materialien, wie Stahl. Aluminium oder Kunststoff bestehen und ist im Normalfall beheizt. Die innere Oberfläche dieser Form entspricht der fertigen Außenoberfläche des Polyurethan-Formteils, so daß sich in Abhängigkeit von der zu erzielenden Oberflächenstruktur und Ausbildung des Formteils komplizierte Oberflächen ergeben können.

Aus der DE-A-38 39 334 ist ein Verfahren zur Herstellung von zumindest im wesentlichen porenfreien Polyurethanmassen durch Umsetzung wenigstens eines Polyisocyanats und wenigstens eines Polyols bekannt, bei dem das Polyol ein partieller Carbonsäureester aus einer Carbonsäure und einem mindestens dreiwertigen Alkohol ist. Es wird angegeben, daß man bei der Herstellung zwischen die Ausgangsmaterialien der Polyurethanmasse und der Unterlage eine Trennfolie einfügen kann.

Es ist nun bekannt, daß man zur Erreichung der Trennwirkung und damit der Entformbarkeit des Polyurethan-Produktes Trennmittel oder Trennlacke auf die innere Oberfläche der Form aufbringen kann. Dies führt Jedoch zu Problemen dadurch, daß sich das Formtrennmittel in den Vertiefungen der Form ansammeln kann, was zu einer Verschlechterung der Oberflächenqualität des Formteils führt und zusätzliche Kosten für die Reinigung der Form beziehungsweise der Wiederherstellung der Form mit sich bringt. Bei Anwendung von Trennlacken, die an der Oberfläche des entformten Formteils anhaften, ergeben sich hierbei minderwertige Lackqualitäten.

Es ist darüber hinaus bekannt, daß man auch sogenannte innere Trennmittel in die Reaktionsmischung einbringen kann, um hierdurch auf die äußeren Trennmittel zu verzichten, die auf die innere Oberfläche der Form aufgetragen werden. Solche inneren Trennmittel können in Abhängigkeit von der Reaktivität der Isocyanatkomponente oder der Polyolkomponente der Reaktionsmischung oder auch beiden Komponenten zugesetzt werden. Es handelt sich dabei um Produkte, die aliphatische Paraffinketten enthalten oder aber auch um Reaktionsprodukte oder Abkömmlinge langkettiger Fettsäuren, wie Hydrierungs-, Reduktions-, Veresterungs- oder Amidierungsprodukte, Salze, Urethane oder Ester solcher Veresterungs- beziehungsweise Amidierungsprodukte, Aminsalze solcher Fettsäuren oder Anlagerungsprodukte, beispielsweise an Carbodiimide.

So beschreibt die DE-A-19 53 637 ein Verfahren zur Herstellung von Schaumstoffen, bei dem als inneres Trennmittel mindestens 25 aliphatische Kohlenstoffatome aufweisende Salze von aliphatischen Carbonsäuren und primären Aminen oder Amid- und/oder Estergruppen aufweisenden Aminen verwendet werden. Diese inneren Trennmittel werden in Mengen von 0,1 bis 15 Gew.-%, bevorzugt 0,5 bis 2 Gew.-%, bezogen auf die Gesamtreaktionsmischung, eingesetzt.

Da sich bei Einbringen solcher Trennmittel in die Polyolkomponente oder die Polyisocyanatkomponente des Reaktionsgemisches Unverträglichkeiten ergeben, was zu einer Phasentrennung und damit zu einer verringerten Lagerbeständigkeit dieser Mischungen führt, schlägt die DE-A 42 23 597 innere Formtrennmittelgemische enthaltende Polyolgemische vor, die 55 bis 95 Gew.-% eines Polyolgemisches aus einem Polyol mit einer OH-Zahl > 700 und einem Polyol mit einer OH-Zahl < 700 und 5 bis 45 Gew.-% eines Formtrennmittelgemisches, bestehend aus 60 bis 95 Gew.-% salzartigen Trennmitteln, 5 bis 40 Gew.-% Trennmitteln mit Amid- oder Urethan-NH-Funktionen ohne Salzcharakter und gegebenenfalls weitere Hilfsmittel enthalten. Als salzartige Trennmittel können Salze aus Fettaminen, durch Alkoxylierung von primären und/oder sekundären aliphatischen oder aromatischen Aminen erhältliche basische Aminabkömmlinge oder Fettsäureester solcher Alkoxylierungsprodukte eingesetzt werden, wobei die Salzbildung vorzugsweise mit Ölsäure oder Tallölfettsäuren, Tranfettsäuren oder andere, bei Raumtemperatur flüssigen Fettsäuren erfolgt.

Die herkömmlichen inneren Trennmittel oder Trennmittelgemische sind nur auf eine Trennwirkung ausgelegt. Dies wird dadurch erzielt, daß möglichst viele Fettsäureketten ins Molekül eingelagert werden, sehr kurze Verbindungen eingesetzt werden oder verschieden aufgebaute Substanzen vermischt werden, um einen eventuellen Synergie-Effekt zu erreichen. Dabei wird den funktionellen Gruppen des inneren Trennmittels keine besondere Bedeutung geschenkt, weil es sich ja nur um eine Zusatzkomponente handelt, indem auch Produkte ohne reaktive Gruppen, wie Hydroxylgruppen, als Trennmittel verwendet werden können.

Da auch diese inneren Trennmittel nicht vollständig befriedigen können, weil einerseits die Trennwirkung verbesserungswürdig erscheint, die Homogenität und die Rückhaltung des Trennmittels in dem Formteil unbefriedigend ist und darüber hinaus die erzielte Trennwirkung für die Extrusionsformung von Profilteilen aus Polyurethan nicht ausreichend ist, besteht die Aufgabe der vorliegenden Erfindung darin, bestimmte Polyolderivate auszuwählen, die als innere Trennmittel beziehungsweise Polyole mit Trenneigenschaften geeignet sind und mit denen eine besonders gute Entformung der damit hergestellten Polyurethan-Formteile erreicht wird, darüber hinaus eine Verbesserung der Oberflächeneigenschaften der Formteile erzielt werden kann und es möglich wird, Polyurethan-Formteile, wie Polyurethan-Profile auch durch Extrusion herzustellen.

Es hat sich gezeigt, daß diese Aufgabe dadurch gelöst werden kann, daß man innere Formtrennmittel verwendet, die aufgrund der Anwesenheit von mindestens zwei alkoholische Hydroxylgruppen in ihrem Molekül in das Polyurethangerüst eingebaut werden können und aufgrund der Anwesenheit des Fettsäurerestes die gewünschte Trennwirkung entfalten.

Die obengenannte Aufgabe wird daher gelöst durch die Verwendung gemäß Hauptanspruch.

Die Unteransprüche betreffen bevorzugte Ausführungsformen dieses Erfindungsgegenstandes.

Gegenstand der Erfindung ist somit die Verwendung von durch Umsetzen eines Ausgangspolyols mit einer Fettsäure oder einem Fettsäurederivat erhältlichen Polyolderivaten mit mindestens 2 alkoholischen Hydroxylgruppen und mindestens einem Fettsäurerest pro Molekül, die unter Verwendung von Diethanolamin, Triethanolamin, Diisopropanolamin, Triisopropanolamin, Dibutanolamin und Umsetzungsprodukten von Ethylenoxid und/oder Propylenoxid mit Ethanolamin, Isopropanolamin, Butanolamin oder primären oder sekundären, aliphatischen oder aromatischen Aminen als Ausgangspolyol erhältlich sind, als innere Trennmittel und/oder Polyol mit Trennmitteleigenschaften bei der Herstellung von Formteilen aus Polyurethan.

Die erfindungsgemäß verwendeten Polyolderivate können somit als inneres Trennmittel in Kombination mit anderen Hauptpolyolen für die Bildung des Polyurethans eingesetzt werden oder aber auch als Hauptpolyol oder alleiniges Polyol mit Trennwirkung.

Dabei ist es möglich, diese Polyolderivate einzeln oder auch in Form von Mischungen aus zwei oder mehr der definierten Polyolderivate einzusetzen.

Die erfindungsgemäßen Polyolderivate enthalten mindestens zwei alkoholische Hydroxylgruppen pro Molekül, um sicherzustellen, daß beim Einbau dieser Polyolderivate in das Polyurethangerüst kein Kettenabbruch erfolgt. Das Polyolderivat kann zwei bis sechs alkoholische Hydroxylgruppen pro Molekül, bevorzugter drei oder vier alkoholische Hydroxylgruppen pro Molekül enthalten, da bei der Anwesenheit von drei oder mehr alkoholischen Hydroxylgruppen pro Molekül eine weitere Vernetzung des Polyurethangerüstes und damit bessere Eigenschaften des Endproduktes erzielt werden. Gemäß einer besonders bevorzugten Ausführungsform der Erfindung enthält das Polyolderivat lediglich einen Fettsäurerest pro Molekül, so daß es auch ohne Beeinträchtigung der übrigen Eigenschaften des Polyurethanprodukts als alleiniges Polyol oder als Hauptpolyol eingesetzt werden kann, und dadurch dem Produkt die notwendigen Trenneigenschaften verleiht.

Gemäß einer bevorzugten Ausführungsform der vorliegenden Erfindung besitzt das Polyolderivat eine Hydroxylzahl von 50 bis 900, vorzugsweise 150 bis 700 und noch bevorzugter von 250 bis 500.

Gemäß einer weiter bevorzugten Ausführungsform der Erfindung enthält das verwendete Polyolderivat mindestens drei primäre oder sekundäre alkoholische Hydroxylgruppen und lediglich einen Fettsäurerest pro Molekül. Dieses bevorzugte Polyolderivat kann als alleiniges Polyol oder Hauptpolyol für die Herstellung von Polyurethan-Formteilen mit verbesserten mechanischen Eigenschaften eingesetzt werden.
Die erfindungsgemäß eingesetzten Polyolderivate erhält man durch Umsetzen eines Ausgangspolyols, welches mindestens zwei alkoholische Hydroxylgruppen aufweist, mit einer Fettsäure oder einem Fettsäurederivat, wie einem Fettsäureanhydrid oder einem Fettsäurehalogenid, wie einem Fettsäurechlorid, durch Erwärmen der in dem entsprechenden gewünschten stöchiometrischen Verhältnis gemischten Reaktionsteilnehmer auf eine Temperatur von 30 bis 100°C, vorzugsweise 40 bis 90°C und noch bevorzugter 60 bis 80°C, wobei man vorzugsweise unter einem Inertgas, wie Stickstoff oder Argon, arbeitet.

Dabei müssen die stöchiometrischen Verhältnisse von Ausgangspolyol und Fettsäure oder Fettsäurederivat derart gewählt werden, daß ein Polyolderivat mit der gewünschten Molekülgröße erhalten wird, das mindestens zwei, vorzugsweise mindestens drei oder vier alkoholische Hydroxylgruppen pro Molekül, die dazu erforderlich sind, das Polyolderivat in das Polyurethangerüst einzubinden, da diese freien alkoholischen Hydroxylgruppen mit den Isocyanatgruppen des Polyisocyanat-Reaktionsteilnehmers ebenso reagieren, wie das normalerweise verwendete Polyol beziehungsweise das neben dem erfindungsgemäß verwendeten Polyolderivat verwendete Polyol, und mindestens einen Fettsäurerest pro Molekül aufweist, welcher die notwendigen Trenneigenschaften vermittelt.

Als Ausgangspolyole zur Bildung der erfindungsgemäß verwendeten Polyolderivate verwendet man stickstoffhaltige Verbindungen mit mindestens zwei alkoholischen Hydroxylgruppen pro Molekül, wie Diethanolamin, Triethanolamin, Diisopropanolamin, Triisopropanolamin, Dibutanolamin oder auch Umsetzungsprodukte von Ethylenoxid und/oder Propylenoxid mit Ethanolamin, Isopropanolamin, Butanolamin oder primären oder sekundären, aliphatischen oder aromatischen Aminen. Die Umsetzungsprodukte von Ethylenoxid und/oder Propylenoxid mit den primären oder sekundären, aliphatischen oder aromatischen Aminen, wie vorzugsweise Ethylendiamin, N-Dimethylethylendiamin, Propylendiamin, N-Dimethylpropylendiamin-1,3, Diethylentriamin oder Triethylentretamin, Diaminodiphenylamin und/oder Toluylendiamin, enthalten aufgrund der Ethoxylierung oder Propoxylierung mindestens zwei aliphatische Hydroxylgruppen im Molekül. Besonders bevorzugte Umsetzungsprodukte dieser Art sind Tetraethanolethylendiamin und Tetraisopropanolethylendiamin beziehungsweise Tetraethoxyethylendiamin und Tetraisopropoxyethylendiamin.

Als Fettsäure wird zur Bildung der erfindungsgemäß verwendeten Polyolderivate eine natürliche und/oder synthetische, gesättigte und/oder ungesättigte Fettsäure mit 8 bis 20 Kohlenstoffatomen eingesetzt, vorzugsweise Palmitinsäure, Stearinsäure, Linolsäure, Linolensäure, Ölsäure, Ricinolsäure, Arachinsäure oder auch natürliche Fettsäuremischungen, wie Kokosfettsäuren, Talgfettsäuren und/oder Tallölfettsäuren.

Besonders bevorzugt ist die Verwendung von ungesättigten Fettsäuren, wie Ölsäure, Linolsäure und/oder Linolensäure beziehungsweise diese ungesättigten Fettsäuren enthaltenden natürlichen Fettsäuregemische, weil die damit erhaltenen Polyolderivate eine niedrigere Viskosität aufweisen, als die unter Verwendung von gesättigten Fettsäuren gebildeten Polyolderivate. Darüber hinaus enthalten die Polyolderivate auf der Grundlage von ungesättigten Fettsäuren eine oder mehrere Doppelbindungen, welche zwar an der Additionsreaktion zur Bildung des Polyurethans nicht teilnehmen, Jedoch später unter Einwirkung von Luftsauerstoff und vorzugsweise bei Anwesenheit von Trockenstoffen oxydieren, wodurch an den Oberflächenrandschichten der erhaltenen Polyurethan-Formteile eine zusätzliche Vernetzung unter Einwirkung von Sauerstoff erreicht wird. Besonders bevorzugt ist es daher, dem Reaktionsgemisch zur Herstellung des Polyurethan-Formteils einen Trockenstoff, vorzugsweise eine Metallseife auf der Grundlage von Kobalt, Mangan und/oder Blei und Carbonsäuren und/oder Naphtensäuren zuzusetzen. Durch die in dieser Weise erreichte nachträgliche zusätzliche Vernetzung des Molekülverbandes wird die Fettsäure des erfindungsgemäß verwendeten Polyolderivats noch besser in den Molekülverbund eingebaut und es wird eine zähharte Verdichtung und Verfestigung der Formteiloberfläche bewirkt. Hieraus resultiert eine verbesserte Lackierbarkeit, eine sehr gute Lackhaftung und Klebbarkeit der nach der erfindungsgemäßen Verwendung hergestellten Polyurethan-Formteile. Da die erfindungsgemäß bevorzugt eingesetzten Tallölfettsäuren einen großen Anteil von ungesättigten und reaktiven Fettsäurebestandteilen enthalten, lassen sich bei Verwendung dieses bevorzugten Ausgangsmaterials und dem Zusatz von Trockenstoffen oder Sikkativen besonders vorteilhafte Ergebnisse erzielen.

Das erfindungsgemäß verwendete Polyolderivat liegt entweder in Form eines Esters der eingesetzten Fettsäure und des verwendeten Ausgangspolyols vor oder bevorzugter in Form eines Salzes oder des Säureamids der Fettsäure und des eine Aminogruppe aufweisenden Ausgangspolyols. Bei der Umsetzung von Aminogruppen oder Stickstoffatome aufweisenden Ausgangspolyolen erfolgt die Reaktion mit der Fettsäure oder dem Fettsäurederivat bevorzugt am Stickstoffatom, so daß hier überwiegend das entsprechende Ammoniumsalz mit der Fettsäure beziehungsweise ein Säureamid gebildet wird, während die freien alkoholischen Hydroxylgruppen nicht mit der Fettsäure reagieren.

Es hat sich überraschenderweise gezeigt, daß diese erfindungsgemäß bevorzugten Salze sich ohne weiteres durch einfaches Erhitzen einer Mischung aus der Fettsäure beziehungsweise des Fettsäurederivats und dem stickstoffhaltigen Ausgangspolyol auf die oben angesprochenen Temperaturen bilden und den Fettsäurerest in ausreichendem Maße an dem Polyolderivat fixieren.

Da die erfindungsgemäß verwendeten Polyolderivate aufgrund der Anwesenheit von mindestens zwei und bevorzugt mindestens drei alkoholischen Hydroxylgruppen in das Polyurethanmolekül des letztlich gebildeten Formteils eingebaut werden, ergibt sich eine wesentlich gleichmäßigere Verteilung und Fixierung des Trennmittels in dem Polyurethanmaterial, so daß das Trennmittel auch bei längerer Lagerung unter ungünstigen Bedingungen nicht aus dem Produkt ausschwitzen kann. Im übrigen ergibt sich hierdurch eine überraschend verbesserte Formbarkeit des gebildeten Polyurethan-Formteils.
Es hat sich gezeigt, daß nach der Lehre der vorliegenden Erfindung erhaltenden Polyurethan-Formteile sich glatt und ohne Hinterlassung von Oberflächenresten aus der Form entnehmen lassen und zum Teil einfach aus der Form herausfallen. Die erzielte Trennwirkung ist bei Temperaturen der Form von zwischen 40 und 60°C am besten, da die hierbei aufzuwendenden Entformungskräfte null oder sehr gering sind, insbesondere bei der Verwendung von Aluminiumformen. Diese Tatsache ist als überraschend anzusehen, weil sich nämlich gezeigt hat, daß bei einer Formtemperatur von 10 bis 15°C sich keine Trennwirkung ergibt und das Material an der Formenwand regelrecht festklebt, während bei einer Formtemperatur von 40 bis 60°C das Formteil ohne weitere Krafteinwirkung aus der Form entnommen oder herausgeschüttelt werden kann.

Die durch die erfindungsgemäße Verwendung der definierten Polyolderivate erzielte deutlich verbesserte Entformbarkeit der Formteile aus Polyurethan ermöglicht erstmals die Herstellung von Formteilen, wie Profilen, aus Polyurethanformmassen durch Extrusion der aushärtenden und vorzugsweise aufschäumenden Polyurethanformmasse, ohne daß sich hierbei Probleme durch das Anhaften des aushärtenden und gegebenenfalls aufschäumenden Polyurethanmaterials an den Oberflächen der Extrusionsvorrichtung ergeben. Darüber hinaus haftet das Material auch bei längeren Betriebszeiten nicht an den Oberflächen der Werkzeuge an, was deren Standzeiten wesentlich verlängert, keine Reinigungsmaßnahmen erforderlich macht und Produkte mit gleichbleibenden Oberflächeneigenschaften ergibt.

Diese überraschende Verbesserung der Trennwirkung ergibt sich dadurch, daß das erfindungsgemäß verwendete Polyolderivat bereits in teilvernetztem Zustand in das Polyurethangerüst eingebaut wird und damit ihre Trennwirkung bereits in einem frühen Stadium entfalten kann, so daß der problematische Übergang vom flüssigen Zustand zum festen Zustand der Polyurethanformmasse gut beherrschbar wird.

Erfindungsgemäß lassen sich ohne weiteres Polyurethanschäume mit sehr niedrigen Dichten herstellen, die deutlich unterhalb 0,1, beispielsweise 0,04 betragen können und die sich dennoch ohne weiteres aus der Form entnehmen lassen. Die Dichte nach oben hin hängt von dem Hohlraumanteil ab, wobei die höchst erhaltene Dichte dann erhalten wird, wenn ein massives porenfreies Polyurethan-Formteil gebildet wird.

Bei dieser Formteilherstellung durch Extrusion werden die Materialkomponenten in üblicher Weise vermischt, beispielsweise durch Niederdruckvermischen mit Hilfe einer Turbine oder durch Hochdruckvermischen mittels InJektion, und werden kontinuierlich oder diskontinuierlich durch Extrusion im Werkzeug weitertransportiert. Da der Rückdruck auf die Mischzone für eine gute Komponentenvermischung begrenzt sein muß, erfolgt der Weitertransport hierbei mechanisch durch Kolben-, Zahnrad- oder Schraubenpumpen, durch Einspritzung niedrigsiedender flüssiger Substanzen, wie CO₂, Stickstoff oder dergleichen oder allein durch die Abzugsvorrichtung, wenn das herzustellende Formteil stabil genug ist, um die Abzugskräfte aufzunehmen, beispielsweise bei Herstellung harter, sehr hoch verdichteter Materialien oder solcher mit einer entsprechend stabilen Verstärkungseinlage.

Die in dieser Weise extrudierten Teile können neben einer geschäumten Struktur auch eine Integralstruktur aufweisen oder auch aus nicht-geschäumtem Polyurethan-Vollmaterial bestehen und eine vernetzte Polyurethan-Struktur aufweisen. Das bei dieser Extrusionsherstellung von Polyurethan-Formteilen unter Verwendung der erfindungsgemäßen Polyolderivate verwendete Werkzeug besteht im allgemeinen aus Aluminium und wird bei einer Temperatur von 40 bis 60°C betrieben und liefert Produkte mit hervorragenden Oberflächeneigenschaften. Dieses Ergebnis ist als überraschend anzusehen, weil auch bei Kenntnis des oben angesprochenen Standes der Technik nicht zu erwarten war, daß es durch Verwendung der Trennmittels in das Molekül des Polyurethan-Formteils möglich wird, auch durch Extrusion Formteile mit hervorragenden Oberflächeneigenschaften problemlos und mit überraschend hohen Standzeiten der verwendeten Werkzeuge herzustellen.

Bei der erfindungsgemäßen Verwendung der in Rede stehenden Polyolderivate erfolgt die Herstellung der Formteile aus Polyurethan durch übliches Vermischen eines Polyols mit dem Polyisocyanat und gegebenenfalls üblichen Hilfsmitteln und Zusatzstoffen. Dabei kann das erfindungsgemäß verwendete Polyolderivat als alleiniges Polyol oder aber auch in Form einer Mischung mit einem üblicher Polyetherpolyol und/oder Polyesterpolyol eingesetzt werden, wobei die Menge des erfindungsgemäß verwendeten Polyolderivats derart bemessen sein muß, daß die angestrebte Trennwirkung erreicht wird.

Die Mengenverhältnisse von Polyolbestandteil zu Polyisocyanatbestandteil sind im allgemeinen stöchiometrisch, wobei vorzugsweise des Polyisocyanat in einem Überschuß von 5 bis 10% eingesetzt wird, um eine vollständige Umsetzung des vorhandenen Polyols und damit die angestrebten mechanischen Eigenschaften des Polyurethan-Endproduktes sicherzustellen, weil insoweit das gegebenenfalls noch vorhandene überschüssige Polyisocyanat mit sich selbst ausreagiert. Darüber hinaus ist es natürlich auch möglich, durch Verwendung des Polyisocyanats in einem größeren Überschuß von 10 bis 40% und durch Anwendung eines Trimerisierungskatalysators, wie eines Amins, Phosphins, eines Alkoholats oder eines quartären Ammoniumcarboxylats, in dem Endprodukt nicht nur Polyurethanbestandteile, sondern Polyisocyanuratbestandteile zu bilden, um in dieser Weise die Eigenschaften des Formteils in der gewünschten Weise einzustellen.

Die Polyurethan-Formteile können, wie bereits angesprochen wurde, aus Polyurethanschaumstoff, Polyurethanintegralschaum oder auch aus massivem Polyurethan bestehen, in Abhängigkeit von den eingesetzten Zusatzstoffen.

Zur Bildung des Polyurethan-Formteils werden neben dem erfindungsgemäß verwendeten Polyolderivat übliche Polyole, beispielsweise Polyetherpolyole und/oder Polyesterpolyole, insbesondere Polyolgemische aus Polyolen mit Molekulargewichten von 500 bis 10000, bevorzugter 800 bis 5000 verwendet.

Als weitere Zusatzstoffe und Hilfsmittel neben dem Polyol und/oder dem erfindungsgemäß verwendeten Polyolderivat und dem Polyisocyanat verwendet man Katalysatoren für die Aktivierung der Polyaddition, wie tertiäre Amine, Triethylendiamin, Zinndioctoat oder Zinndibutyllaurat, Kettenverlängerungsmittel, wie Butandiole, Schaumstabilisatoren, wie Polysiloxan/Polyoxyalkylen-Blockpolymere, Treibmittel, wie beispielsweise CHF₂Cl, Propan, Cyclopentan oder Wasser, sowie die oben bereits angesprochenen Aktivatoren für die oxidative Vernetzung der Fettsäuredoppelbindungen, das heißt also Trockenstoffe beziehungsweise Sikkative.

Als Polyisocyanate werden die üblichen Materialien eingesetzt, wie Tetramethylendiisocyanat, Hexamethylendiisocyanat, N-Xylylendiisocyanat, p-Xylylendiisocyanat, 4,4'-Dimethyl-1,3-xylylen-diisocyanat, Cyclohexan-1,4-diisocyanat, Cyclohexylmethan-4,4'-diisocyanat, N-Phenylen-diisocyanat, p-Phenylendiisocyanat, 1-Alkylbenzol-2,4- und -2,6-diisocyanat, Ditolylen-2,4- und -2,6-diisocyanat, 3-(a-Isocyanatoethyl)-phenylisocyanat, 1-Benzylbenzol-2,6-diisocyanat, 2,6-Diethyl-benzol-1,4-diisocyanat, Diphenylmethan-4,4'-diisocyanat, 3,3'-Dimethoxydiphenylmethan-4,4'-diisocyanat, Naphthylen-1,5-diisocyanat oder auch tri- und mehrfunktionelle Polyisocyanate, vorzugsweise verwendet man Jedoch 4,4'-Methylendi-(phenylisocyanat)(MDI).

Weitere übliche Zusatzstoffe, die dem Fachmann geläufig sind, sind Emulgatoren, Zellregler, Flammschutzmittel, Füllstoffe, Farbstoffe und/oder Reaktionsverzögerer.

Diese Zusatzstoffe werden im allgemeinen der Polyolkomponente zugemischt. Außer dem Zusatz von Trockenstoffen können die erfindungsgemäß verwendeten Polyolderivate und die angesprochenen Zusatzstoffe Bestandteile normaler Formulierungen für die Herstellung von Polyurethan-Formteilen sein.

Besonders vorteilhaft erweist sich dabei, daß die erfindungsgemäß verwendeten Polyolderivate aufgrund der Anwesenheit der mindestens zwei und bevorzugter mindestens drei alkoholischen Hydroxylgruppen sich nicht von den übrigen Bestandteilen des Polyols abtrennen oder eine getrennte Phase bilden und damit eine Entmischung nicht möglich ist, so daß auch die Lagerbeständigkeit dieser erfindungsgemäß als innere Trennmittel verwendeten Produkte in Kombination mit den Polyolen besonders gut ist. Durch den Einbau der erfindungsgemäß verwendeten Polyolderivate in das Polyurethan-Molekül wird ein etwaiges Ausschwitzen des Trennmittels vollständig verhindert, was bei herkömmlichen inneren Trennmitteln nicht möglich ist, die sich aufgrund ihrer unterschiedlichen Eigenschaften und ihres geringeren Molekulargewichts weniger gut in der Masse halten können und mit der Zeit an die Oberfläche der Formteile wandern.

Ein wesentlicher Vorteil der erfindungsgemäßen Lehre ist darin zu sehen, daß sich in den für die Herstellung der Polyurethan-Formteile verwendeten Werkzeugen, wie Komponentenpumpen, Mischköpfen, Formen und Extrusionsmundstücken kein Trennmittel ansammelt, so daß diese Werkzeuge auch bei längerem kontinuierlichen Betrieb nicht gereinigt werden müssen und kaum einem Verschleiß unterliegen. Der weitere Vorteil ist darin zu sehen, daß durch die Anwesenheit der Fettsäure in den erfindungsgemäß verwendeten Polyolderivaten und deren Einbau in das Polyurethanmolekül dessen Hydrolysebeständigkeit erhöht wird. Die Anwesenheit des Fettsäurerestes in den erfindungsgemäß eingesetzten Polyolderivaten steigert darüber hinaus die Emulgiereigenschaften des Materials und damit die Verträglichkeit dieses Bestandteils mit den anderen Komponenten der Polyurethan-Reaktionsmischung und damit die Bildung und Stabilisierung des eventuell herzustellenden Schaums. Aufgrund der einfachen Herstellung der erfindungsgemäß eingesetzten Polyolderivate wird es auch dem Verarbeiter möglich, durch entsprechende Anpassung der Zahl der Hydroxylgruppen und der Fettsäurereste die Eigenschaften der Polyolkomponente und damit die Eigenschaften des Polyurethans zumindest zum Teil selbst zu bestimmen und einzustellen. Die folgenden Beispiele dienen der weiteren Erläuterung der Erfindung.

### Herstellungsbeispiel 1

### Polyolderivat auf Aminbasis

Man bildet ein Umsetzungsprodukt aus einem Mol Ethylendiamin und 4 Mol Propylenoxid, so daß man ein Zwischenprodukt der folgenden Formel erhält: 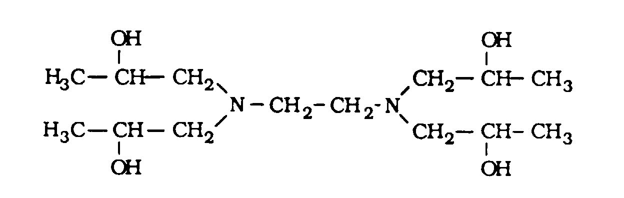 mit einem Molekulargewicht von 292. Dieses Material besitzt vier alkoholische Hydroxylgruppen und eine Hydroxylzahl von 768.

Man setzt dieses Zwischenprodukt durch Erwärmen auf 60 bis 80°C mit einem Mol Tallölfettsäuren um. Dabei steigt das Molekulargewicht auf etwa 570 und die Hydroxylzahl sinkt auf etwa 400.

### Herstellungsbeispiel 2

### Polyolderivat auf Grundlage eines Alkanolamins

Man setzt handelsübliches ein Mol Triisopropanolamin (Molekulargewicht = 191, Hydroxylzahl = 880, welches drei alkoholische Hydroxylgruppen aufweist), mit einem Mol Tallöldestillat (Fettsäure/Harzsäure = 80/20) durch Erwärmen um. Man erhält die Verbindung der nachfolgenden Formel: 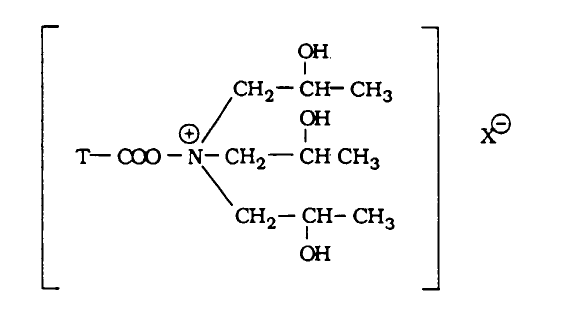 worin T für den Rest der Tallölfettsäuren und X⁻ für ein Anion stehen. Das Polyolderivat besitzt ein Molekulargewicht von ca. 470 und eine Hydroxylzahl von etwa 360.

Wenngleich der Schmelzpunkt des Triisopropanolamins bei 59°C liegt, erhält man durch die Umsetzung mit den Tallölfettsäuren aufgrund der darin vorliegenden Doppelbindungen eine für die Verarbeitung günstige Viskosität des Polyolderivats.

### Herstellungsbeispiel 3

### Polyolderivat auf Basis von Triethanolamin

Man verwendet als Ausgangspolyol ein propoxyliertes Triethanolamin mit einer Hydroxylzahl von 450 und drei alkoholischen Hydroxylgruppen. Ein Mol dieses Ausgangspolyols wird mit einem Mol Tallölfettsäure-Destillat durch Erhitzen während einer Stunde auf 60 bis 80°C umgesetzt. Man erhält ein Polyolderivat mit einem Molekulargewicht von etwa 660 und einer Hydroxylzahl von etwa 250.

Die in den nachfolgenden Beispielen angegeben Teile sind auf das Gewicht bezogen.

### Beispiel 1

Man bildet ein Polyurethan-Formteil unter Anwendung der folgenden Komponenten A und B:

| **Komponente A:** | |
|---|---|
| 40 Teile | Polyol nach Herstellungsbeispiel 1 Hydroxylzahl 400 mg KOH/g |
| 40 Teile | Polyol nach Herstellungsbeispiel 2 Hydroxylzahl 360 mg KOH/g |
| 10 Teile | Butandiol 1,4, Hydroxylzahl 1200 mg KOH/g |
| 3,5 Teile | Polyätherpolyol, hergestellt durch Anlagerung von 87% Propylenoxyd und 17% Äthylenoxyd an |
| | Trimethylolpropan, Hydroxylzahl 36 mg KOH/g |
| 0,4 Teile | Wasser |
| 5 Teile | Treibmittel R22 (CHClF₂) |
| 0,3 Teile | Triethylendiamin 33%ig in Dipropylenglykol Dabco 33 LV der Fa. Houdry-Hüls (= 1,4-Diaza-bicyclo[2.2.2]octan) |
| 0,8 Teile | Silikonstabilisator (Polysiloxan/Polyoxyalkylen/Block-polymere der Fa. Goldschmidt, z.B.: B 2219) |

| **Komponente B:** | |
|---|---|
| 120 Teile | Polyisocyanat MDI, 4,4-Diphenyl-methan-diisocyanat mit einem NCO-Gehalt von 28% bis 30%. Viskosität (25°C) ca. 200 mPA·s |

100 Teile der Komponente A und 120 Teile der Komponente B (die in einem 5%-igen stöchiometrischen Überschuß über die in der Komponente A enthaltene Polyolmenge eingesetzt wird) werden bei einer Temperatur von 20 bis 25°C mit einer Zweikomponenten-Hochdruck-Dosiermischmaschine intensiv vermischt und in eine geschlossene Aluminiumform eingefüllt. Bei einer Werkzeugtemperatur von ca. 50 bis 60°C reagiert die Mischung nach einer Startzeit von ca. 3 Sekunden, füllt den Formhohlraum aus und härtet aus. Nach 3 Minuten wir die Form geöffnet und das geschäumte Formteil aus der Form entnommen. Bei der Entnahme des Formteils wird keinerlei Entformungskraft benötigt, desgleichen lassen sich die Werkzeughälften leicht öffnen. Auch bei wiederholter Herstellung der Formteile in dieser Weise kann ohne irgendwelches Nacharbeiten oder Reinigen der Form das gebildete Formteils jeweils ohne weiteres entnommen werden. Nach der Abkühlung kann das Formteil gegebenenfalls weiterverarbeitet werden.

### Beispiel 2

Man bildet ein Polyurethan-Formteil unter Anwendung der folgenden

### Komponenten A und B:

| **Komponente A:** | |
|---|---|
| 25 | Teile Polyol nach Herstellungsbeispiel 1 Hydroxylzahl 400 mg KOH/g |
| 20 | Teile Polyol nach Herstellungsbeispiel 2 Hydroxylzahl 360 mg KOH/g |
| 5 | Teile Polyol nach Herstellungsbeispiel 3 Hydroxylzahl 250 mg KOH/g |
| 30 | Teile handelsübliches Polyetherpolyol auf Aminbasis, Funktionalität = 4,5, Hydroxylzahl 450 mg KOH/g |
| 5,5 | Teile handelsübliches Polyetherpolyol, hergestellt durch Anlagerung von 87% Propylenoxid und 17% Ethylenoxid an Trimethylolpropan, Funktionalität = 3, Hydroxylzahl 36 mg KOH/g |
| 2 | Teile Wasser |
| 10 | Teile Treibmittel R22 (CHCIF₂) |
| 0,2 | Teile Triethylendiamin 33%ig in Dipropylenglykol (Dabco 33LV der Fa. Houdry-Hüls (= 1,4-Diaza-bicyclo[2.2.2]octan)) |
| 1 | Teil Dimethylcyclohexylamin |
| 0,1 | Teil Dibutylzinndilaurat |
| 1,2 | Teile Silikonstabilisator (Polysiloxan/Polyoxyalkylen/Blockpolymere der Fa. Goldschmidt, z.B.: B 2219 |

| **Komponente B:** | |
|---|---|
| 125 | Teile Polyisocyanat MDI, 4,4-Diphenyl-methan-diisocyanat, handelsüblich, NCO-Gehalt (25°C) 30,7, Viskosität 230 mPa s, Funktionalität 2,7 |

Man vermischt 100 Teile der Komponente A und 125 Teile der Komponente B (was einem 10%iger stöchiometrischer Überschuß gegenüber dem Polyol entspricht) intensiv bei 20 bis 25°C in einer Zweikomponenten-Hochdruck-Dosiermischmaschine und füllt die Mischung in eine geschlossene Aluminiumform ein. Das Gemisch reagiert nach einer Ruhezeit von 5 Sekunden und füllt den Formhohlraum bei einer Werkzeugtemperatur von 55°C aus. Nach 5 Minuten wird die Form geöffnet und das geschäumte Formteil entnommen. Frei geschäumt beträgt das Raumgewicht 40 g/dm³.

Das Werkzeug wird mit drei unterschiedlichen Materialmengen befüllt. Beim ersten Versuchw wird gerade soviel Material in die Form eingebracht, daß die Form gerade voll schäumt und ein ausgehärtetes Produkt mit einem Raumgewicht von 40 bis 50 g/dm³ ergibt (was nahezu dem freigeschäumten Raumgewicht entspricht).

Beim zweiten Versuch wird die Form mit einem Verdichtungsgrad von zwei befüllt (doppelte Menge an Ausgangsmaterial), so daß das fertig geschäumte Formteil eine Dichte von 0,08 besitzt. Der dritte Versuch erfolgt mit einem Verdichtungsgrad von 4, entsprechend einem Raumgwicht des Formteils von ca. 160 g/dm³.

Bei allen drei Versuchen läßt sich das Werkzeug ohne weiteres von Hand öffnen und ebenso leicht lassen sich die Formteile ohne Rückstand aus der Form entnehmen. Bei allen Versuchen, insbesondere auch beim Versuch 1, bei der ein Formteil mit einem sehr geringen Raumgewicht von 40 g/dm³ hergestellt wird, bleiben auch bei wiederholter Herstellung keine Materialreste in der Form zurück. Lediglich bei Versuch 1 ist die Formteiloberfläche (Schäumhaut) aufgrund der niedrigen Dichte und des beim Schäumvorgang herrschenden minimalen Schäumdrucks nicht besonders fest ausgeprägt. Mit steigendem Verdichtungsgrad wird die Schäumhaut dicker und stabiler. Nach der Abkühlung können die Formteile ohne eine weitere Bearbeitung der Schaumteiloberflächen weiterverarbeitet und lackiert werden.

## Patentansprüche

1. Verwendung von durch Umsetzen eines Ausgangspolyols mit einer Fettsäure oder einem Fettsäurederivat erhältlichen Polyolderivaten mit mindestens 2 alkoholischen Hydroxylgruppen und mindestens einem Fettsäurerest pro Molekül, die unter Verwendung von Diethanolamin, Triethanolamin, Diisopropanolamin, Triisopropanolamin, Dibutanolamin und Umsetzungsprodukten von Ethylenoxid und/oder Propylenoxid mit Ethanolamin, Isopropanolamin, Butanolamin oder primären oder sekundären, aliphatischen oder aromatischen Aminen als Ausgangspolyol erhältlich sind, als innere Trennmittel und/oder Polyol mit Trennmitteleigenschaften bei der Herstellung von Formteilen aus Polyurethan.

2. Verwendung nach Anspruch 1, **dadurch gekennzeichnet**, daß das Polyolderivat 2 bis 6, bevorzugter 2, 3 oder 4 alkoholische Hydroxylgruppen pro Molekül aufweist.

3. Verwendung nach Anspruch 1 oder 2, **dadurch gekennzeichnet**, daß das Polyolderivat 3 oder 4 primäre und/oder sekundäre alkoholische Hydroxylgruppen und lediglich einen Fettsäurerest pro Molekül aufweist.

4. Verwendung nach den Ansprüchen 1 bis 3, **dadurch gekennzeichnet**, daß das Polyolderivat eine Hydroxylzahl von 50 bis 900, vorzugsweise 150 bis 700, bevorzugter von 200 bis 600 und noch bevorzugter von 250 bis 500 besitzt.

5. Verwendung nach den Ansprüchen 1 bis 4, **dadurch gekennzeichnet,** daß das Ausgangspolyol als primäres oder sekundäres, aliphatisches oder aromatisches Amin Ethylendiamin, N-Dimethylethylendiamin, Propylendiamin, N-Dimethylpropylendiamin-1,3, Diethylentriamin, Triethylentetramin, Diaminodiphenylamin und/oder Toluylendiamin umfaßt.

6. Verwendung nach den Ansprüchen 1 bis 4, **dadurch gekennzeich net,** daß das Ausgangspolyol das Umsetzungsprodukt von Ethylenoxid und/oder Propylenoxid mit Tetraethanolethylendiamin und Tetraisopropa-nolethylendiamin bzw. Tetraethoxyethylendiamin und Tetraisopropoxyethylendiamin umfaßt.

7. Verwendung nach mindestens einem der Ansprüche 1 bis 6 **dadurch gekennzeichnet**, daß das Polyolderivat durch Umsetzen des Ausgangspolyols mit einer natürlichen und/oder synthetischen, gesättigten und/oder ungesättigten Fettsäure erhältlich ist.

8. Verwendung nach Anspruch 7, **dadurch gekennzeichnet**, daß das Polyolderivat durch Umsetzen mit einer Fettsäure mit 8 bis 20 Kohlenstoffatomen erhältlich ist.

9. Verwendung nach Anspruch 7 oder 8, **dadurch gekennzeichnet**, daß das Polyolderivat durch Umsetzen des Ausgangspolyols mit der Fettsäure bei einer Temperatur von 30 bis 100°C, vorzugsweise 40 bis 90°C und noch bevorzugter von 60 bis 80°C erhältlich ist.

10. Verwendung nach den Ansprüchen 7 bis 9, **dadurch gekennzeichnet**, daß das Polyolderivat unter Verwendung von Palmitinsäure, Stearinsäure, Linolsäure, Linolensäure, Ölsäure, Ricinolsäure, Arachinsäure, Kokosfettsäuren, Talgfettsäuren und/oder Tallölfettsäuren gebildet worden ist.

11. Verwendung nach Anspruch 10, **dadurch gekennzeichnet**, daß das Polyolderivat unter Verwendung von ungesättigten Fettsäuren, wie Ölsäure, Linolsäure und/oder Linolensäure gebildet worden ist.

12. Verwendung nach Anspruch 11, **dadurch gekennzeichnet**, daß das Reaktionsgemisch zur Herstellung des Polyurethan-Formteils einen Trockenstoff, vorzugsweise eine Metallseife auf der Grundlage von Kobalt, Mangan und/oder Blei und Carbonsäuren und/oder Naphthensäuren enthält.

13. Verwendung nach mindestens einem der vorhergehenden Ansprüche, **dadurch gekennzeichnet**, daß als Polyolderivat ein Ester der Fettsäure und des Ausgangspolyols oder ein Salz oder Säureamid der Fettsäure und des eine Aminogruppe aufweisenden Ausgangspolyols eingesetzt wird.

14. Verwendung nach mindestens einem der vorhergehenden Ansprüche, **dadurch gekennzeichnet,** daß das Polyolderivat als alleiniges Polyol oder in Mischung mit einem üblichen Polyetherpolyol und/oder Polyesterpolyol zusammen mit einem üblichen Polyisocyanat und üblichen Hilfsmitteln und Zusatzstoffen für die Herstellung der Formteile aus Polyurethan, vorzugsweise aus Polyurethanschaumstoff eingesetzt wird.

15. Verwendung nach einem der Ansprüche 1 bis 14, **dadurch gekennzeichnet**, daß das Polyolderivat einzeln oder in Form einer Mischung aus zwei oder mehr Polyolderivaten eingesetzt wird.

16. Verwendung der Polyolderivate nach mindestens einem der Ansprüche 1 bis 15, bei der Herstellung von Formteilen aus Polyurethanformmassen durch Extrusion der aushärtenden und vorzugsweise aufschäumenden Polyurethanformmasse.

## Claims

1. Use of polyol derivatives which can be obtained by reacting a starting polyol with a fatty acid or a fatty acid derivative, said polyol derivatives containing at least two alcoholic hydroxy groups and at least one fatty acid residue per molecule, which can be obtained by using diethanol amine, triethanol amine, diisopropanol amine, triisopropanol amine, dibutanol amine, and reaction products of ethylene oxide and/or propylene oxide with ethanol amine, isopropanol amine, butanol amine, or primary or secondary, aliphatic or aromatic amines as starting polyol, as internal lubricants and/or polyol with lubricant properties in the production of molded polyurethane parts.

2. Use as claimed in Claim 1, characterized in that the polyol derivative has 2 to 6, more preferably 2, 3 or 4 alcoholic hydroxy groups per molecule.

3. Use as claimed in Claim 1 or 2, characterized in that the polyol derivative has 3 or 4 primary and/ or secondary alcoholic hydroxy groups and only one fatty acid residue per molecule.

4. Use as claimed in claims 1 to 3, characterized in that the polyol derivative has a hydroxy value from 50 to 900, preferably 150 to 700, more preferably from 200 to 600, and still more preferably from 250 to 500.

5. Use as claimed in Claims 1 to 4, characterized in that the starting polyol contains ethylene diamine, N-dimethylethylenediamine, propylenediamine, N-dimethylpropylene diamine-1,3, diethylenetriamine, triethylenetetramine, diaminodiphenylamine, and/or toluylenediamine as a primary or secondary aliphatic or aromatic amine.

6. Use as claimed in Claims 1 to 4, characterized in that the starting polyol contains the reaction product of ethylene oxide and/ or propylene oxide with tetraethanolethylenediamine and tetraisopropanolethylenediamine or tetraethoxyethylenediamine and tetraisopropoxyethylenediamine.

7. Use as claimed in at least one of Claims 1 to 6, characterized in that the polyol derivative can be obtained by reacting the starting polyol with a natural and/or synthetic, saturated and/or unsaturated fatty acid.

8. Use as claimed in Claim 7, characterized in that the polyol derivative can be obtained by reaction with a fatty acid with 8 to 20 carbon atoms.

9. Use as claimed in Claim 7 or 8, characterized in that the polyol derivative can be obtained by reacting the starting polyol with the fatty acid at a temperature from 30 to 100°C, preferably 40 to 90°C, and even more preferably 60 to 80°C.

10. Use as claimed in Claims 7 to 9, characterized in that the polyol derivative has been formed by using palmitic acid, stearic acid, linoleic acid, linolenic acid, oleic acid, ricinoleic acid, arachic acid, coconut oil fatty acids, tallow fatty acids, and/or tall oil fatty acids.

11. Use as claimed in Claim 10, characterized in that the polyol derivative has been formed using unsaturated fatty acids, such as oleic acid, linoleic acid, and/or linolenic acid.

12. Use as claimed in Claim 11, characterized in that the reaction mixture for producing the molded polyurethane part contains a drying agent, preferably a metallic soap based on cobalt, manganese, and/or lead and carboxylic acids and/or naphthenic acids.

13. Use as claimed in at least one of the above claims, characterized in that the used polyol derivative is an ester of the fatty acid and the starting polyol, or a salt or acid amide of the fatty acid and the starting polyol which has one amino group.

14. Use as claimed in at least one of the above claims, characterized in that the polyol derivative is used as individual polyol or in mixture with a standard polyether polyol and/or polyester polyol together with a standard polyisocyanate and standard auxiliary agents and additives for the production of the molded parts of polyurethane, preferably of polyurethane foam.

15. Us as claimed in one of Claims 1 to 14, characterized in that the polyol derivative is used alone or in the form of a mixture of two or more polyol derivatives.

16. Use of the polyol derivatives as claimed in at least one of Claims 1 to 15, in the production of molded parts from polyurethane molding compounds by extrusion of the hardening and preferably expanding polyurethane molding compound.

## Revendications

1. Utilisation de dérivés polyols pouvant être obtenus au moyen d'une réaction d'un polyol de départ avec un acide gras ou un dérivé d'acide gras ayant au moins 2 groupes hydroxyles alcooliques et au moins un résidu d'acide gras par molécule qui peuvent être obtenus, en tant que polyol de départ, en utilisant la diéthanolamine, la triéthanolamine, la diisopropanolamine, la triisopropanolamine, la dibutanolamine et les produits de réaction de l'oxyde d'éthylène et/ou l'oxyde de propylène avec l'éthanolamine, l'isopropanolamine, la butanolamine ou les amines primaires ou secondaires, aliphatiques ou aromatiques, en tant qu'agent de démoulage interne et/ou polyol ayant des propriétés d'agent de démoulage pour la production de pièces moulées de polyuréthanne.

2. Utilisation selon la revendication 1, caractérisée en ce que le dérivé polyol comporte 2 à 6, de préférence 2,3 ou 4 groupes hydroxyles alcooliques par molécule.

3. Utilisation selon la revendication 1 ou 2, caractérisée en ce que, le dérivé polyol comporte 3 ou 4 groupes hydroxyles alcooliques primaires et/ou secondaires et uniquement un résidu d'acide gras par molécule.

4. Utilisation selon les revendications 1 à 3, caractérisée en ce que le dérivé polyol possède un indice d'hydroxyle de 50 à 900, de préférence de 150 à 700, de manière particulièrement préférée de 200 à 600 et de manière tout particulièrement préférée de 250 à 500.

5. Utilisation selon les revendications 1 à 4, caractérisée en ce que le polyol de départ comprend en tant qu'amine primaire ou secondaire, aliphatique ou aromatique, l'éthylènediamine, la N-méthyléthylènediamine, la propylènediamine, la N-diméthylpropylènediamine-1,3, la diéthylène-triamine, la triéthylènetétramine, la diamino-diphénylamine et/ou la toluylènediamine.

6. Utilisation selon les revendications 1 à 4, caractérisée en ce que le polyol de départ comprend le produit de réaction de l'oxyde d'éthylène et/ou l'oxyde de propylène avec la tétraéthanoléthylènediamine et la tétraisopropanol-éthylènediamine soit la tétraéthoxyéthylènediamine et la tétraisopropoxyéthylènediamine.

7. Utilisation selon au moins l'une quelconque des revendications 1 à 6, caractérisée en ce que le dérivé polyol peut être obtenu par la réaction du polyol de départ avec un acide gras naturel et/ou synthétique, saturé et/ou insaturé.

8. Utilisation selon la revendication 7, caractérisée en ce que le dérivé polyol peut être obtenu par la réaction avec un acide gras ayant 8 à 20 atomes de carbone.

9. Utilisation selon la revendication 7 ou 8, caractérisée en ce que, le dérivé polyol peut être obtenu par la réaction du polyol de départ avec l'acide gras à une température de 30 à 100°C, de préférence de 40 à 90°C et de manière tout particulièrement préférée de 60 à 80°C.

10. Utilisation selon les revendications 7 à 9, caractérisée en ce que le dérivé polyol a été formé en utilisant l'acide palmitique, l'acide stéarique, l'acide linoléique, l'acide linolénique, l'acide oléique, l'acide ricinoléique, l'acide gras issu de l'arachide, les acides gras de coprah, les acides gras de suif et/ou les acides gras de tallol.

11. Utilisation selon la revendication 10, caractérisée en ce que le dérivé polyol a été formé en utilisant des acides gras insaturés, comme l'acide oléique, l'acide linoléique et/ou l'acide linolénique.

12. Utilisation selon la revendication 11, caractérisée en ce que le mélange réactionnel pour produire la pièce moulée de polyuréthanne, contient un siccatif, de préférence un savon métallique à base de cobalt, manganèse et/ou plomb et d'acides carboxyliques et/ou d'acides naphténiques.

13. Utilisation selon au moins une quelconque des revendications précédentes, caractérisée en ce que un ester de l'acide gras et du polyol de départ ou un sel ou un amide d'acide de l'acide gras et du polyol de départ comportant un groupe amino sont mis en oeuvre, en tant ou dérivé polyol.

14. Utilisation selon au moins une quelconque des revendications précédentes, caractérisée en ce que le dérivé polyol est mis en oeuvre, en tant que polyol seul ou en mélange avec un polyétherpolyol et/ou polyesterpolyol usuel conjointement avec un polyisocyanate et des adjuvants et additifs courants pour la production de pièces moulées de polyuréthanne, de préférence à base de mousse de polyuréthanne.

15. Utilisation selon l'une quelconque des revendications 1 à 14, caractérisée en ce que le dérivé polyol est mis en oeuvre seul ou sous forme d'un mélange de deux ou plusieurs dérivés polyols.

16. Utilisation des dérivés polyols selon au moins l'une quelconque des revendications 1 à 15, pour la production de pièces moulées à base de masses moulées de polyuréthanne au moyen d'une extrusion de la masse moulée de polyuréthanne qui durcit et de préférence mousse
